(19) Europäisches Patentamt
European Patent Office
Office européen des brevets

(11) **EP 0 993 186 B1**

(12) **FASCICULE DE BREVET EUROPEEN**

(45) Date de publication et mention de la délivrance du brevet:
**13.12.2006 Bulletin 2006/50**

(51) Int Cl.:
***H04N 5/445*** *(2006.01)*

(21) Numéro de dépôt: **99402461.0**

(22) Date de dépôt: **07.10.1999**

(54) **Procédé de correction de l'effet de tremblement et de scintillement des éléments d'image incrustés sur une image vidéo**

Verfahren zum korrigieren von Zitter- und Flimmereffekte von in einem Videobild eingeblendeten Bildelementen

Method for correcting jitter and flicker effects of video image pixel inlays

(84) Etats contractants désignés:
**DE FR GB IT**

(30) Priorité: **09.10.1998 FR 9812691**

(43) Date de publication de la demande:
**12.04.2000 Bulletin 2000/15**

(73) Titulaire: **STMicroelectronics S.A.**
**92120 Montrouge (FR)**

(72) Inventeur: **Vos, Mark**
**75116 Paris (FR)**

(74) Mandataire: **Ballot, Paul Denis Jacques**
**Cabinet Ballot**
**122, rue Edouard Vaillant**
**92593 Levallois-Perret Cedex (FR)**

(56) Documents cités:
| | |
|---|---|
| **EP-A- 0 762 331** | **WO-A-98/17056** |
| **WO-A-98/17058** | **WO-A-98/17066** |
| **GB-A- 2 292 294** | **US-A- 5 510 843** |
| **US-A- 5 638 112** | **US-A- 5 640 502** |
| **US-A- 5 742 349** | |

**Description**

La présente invention se rapporte à un procédé de correction de l'effet de tremblement et de scintillement des éléments d'image incrustés sur une image vidéo.

Plus particulièrement, l'invention concerne un procédé permettant d'attribuer, en tenant compte de la valeur des pixels voisins de l'image vidéo d'origine, des nouvelles valeurs aux pixels de certaines lignes d'éléments incrustés, dans le but d'améliorer la qualité de ces éléments incrustées.

Une image vidéo est constituée d'une succession de lignes de pixels. Les pixels sont des éléments d'image élémentaires. Dans les systèmes de télévision couleur, chaque pixel est porteur d'informations de luminance et de chrominance qui permettent de déterminer la luminosité et la couleur de chaque point de l'image. Dans les systèmes de télévision les plus utilisés, l'image évolue selon un principe de balayage horizontal de l'écran. Qu'il s'agisse du système de télévision NTSC, du système de télévision PAL, ou encore du système de télévision SECAM, chaque image affichée résulte de l'affichage alternatif de deux images partielles distinctes appelées trames.

D'une façon générale, il existe une première trame, dite trame impaire, et une seconde trame, dite trame paire.

La nature même des images de télévision, à savoir, l'entrelacement de deux images partielles, donne naissance à des problèmes de qualité de l'image, et notamment à un problème de scintillement (FLICKER dans la littérature anglaise). Ainsi, dans un cas extrême, une ligne de pixels noirs sur un fond d'image blanc donnera la désagréable impression à l'oeil humain d'apparaître et de disparaître, particulièrement si cette ligne est observée de près.

Par ailleurs, il est de plus en plus fréquent d'afficher des éléments d'image incrustés d'origine numérique sur des images vidéo. Ces éléments d'images incrustés sont appelés des OSD (On Screen Display, dans la littérature anglaise). Chaque pixel d'un OSD se caractérise par trois valeurs Y, U et V pour la détermination de la luminosité et de la couleur, et d'une valeur de transparence MW.

Les OSD servent, par exemple, à indiquer de façon permanente ou non l'avancement d'un évènement sportif. Ils indiquent notamment le score d'un match. Ils sont également utilisés par certaines chaînes de télévision qui indiquent, grâce à un OSD représentant leur logo, quelle chaîne de télévision est visible à l'écran.

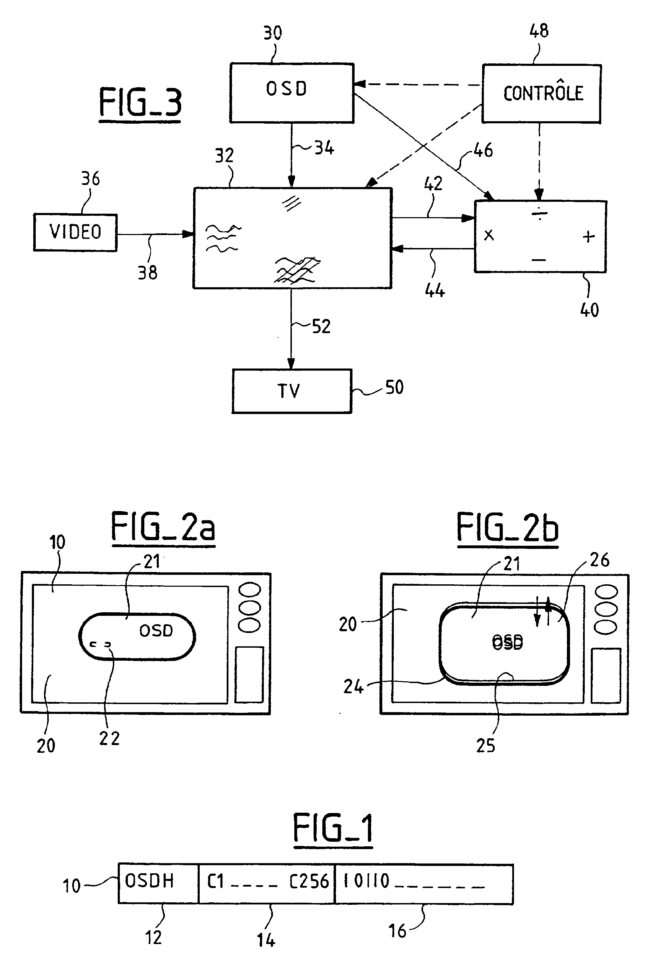

La figure 1 représente schématiquement la structure courante du code d'un OSD. Un train binaire 10 contenant les codes nécessaires à l'affichage d'un OSD est composé le plus souvent de trois ensembles de bits ayant des fonctions différentes.

Un premier ensemble de bits 12 constitue l'en-tête de l'OSD (OSD - header dans la littérature anglaise).

L'en-tête 12 de l'OSD comporte notamment des informations relatives au nombre de bits nécessaires pour définir un pixel, aux coordonnées de certains points caractéristiques de l'OSD...

Un deuxième ensemble de bits 14 sert à définir la gamme de couleurs qui sera utilisée lors de l'affichage de l'OSD. Toutes les couleurs qui seront utilisées sont mémorisées dans une mémoire spécifique, dite table des couleurs disponibles (Color Look-Up Table, ou CLUT dans la littérature anglaise). Elle est le plus souvent limitée à 256 lignes de mémoire, chaque ligne de mémoire contenant les valeurs des bits correspondant à une couleur programmée dans la table grâce au deuxième ensemble de bits 14. Le choix de la taille de la table de couleurs disponibles résulte d'un compromis entre la rapidité d'accès à la table et le nombre de couleurs nécessaires pour assurer une qualité correcte pour l'OSD.

Enfin, un troisième ensemble de bits 16 est constitué des adresses des lignes de mémoire de la table des couleurs disponibles contenant la couleur appropriée pour chaque pixel de l'OSD.

Si les problèmes de scintillement existent, comme il vient d'être dit, dans les images de télévision purement analogiques, ils sont faibles par rapport aux phénomènes de scintillement qui peuvent apparaître lorsqu'on affiche des éléments d'image incrustés sur un fond d'image vidéo.

En effet, l'atténuation systématique de contrastes dans les images vidéo, du fait de la présence de caméra dans le cycle de génération de l'image, ne se rencontre pas lors de la création d'un OSD. Deux motifs de couleurs éloignées dans le spectre des fréquences visibles peuvent être juxtaposés. Ainsi, lorsque des éléments d'image d'origine numérique sont incrustés sur l'image vidéo, d'importants contrastes entre deux lignes consécutives peuvent apparaître. En effet, lorsqu'un OSD est créé, le fond de l'image vidéo sur lequel l'OSD sera affiché ne peut généralement pas être connu. Ainsi, dans des cas extrêmes, un OSD bleu peut être affiché alors que le fond de l'image vidéo est rouge. D'autre part à l'intérieur même d'un OSD, rien n'interdit au concepteur de l'OSD de juxtaposer deux lignes qui contrastent fortement.

Les figures 2a et 2b sont des illustrations de problèmes que l'on peut rencontrer lors de l'affichage d'un OSD sur un fond d'image vidéo.

A la figure 2a est représentée un écran de télévision 10 qui affiche un OSD 21 sur un fond d'image vidéo 20. L'OSD 21 présente notamment une zone à fond blanc sur laquelle se détache un fin trait noir d'une largeur de un pixel. C'est typiquement le cas où l'effet de scintillement est le plus visible. Du fait de l'entrelacement des trames paires et impaires, le fin trait noir 22 apparaît et disparaît de façon suffisamment lente pour que ce phénomène soit détecté par l'oeil humain.

La figure 2b représente un autre type de problèmes lié à l'affichage d'un OSD sur un fond d'image vidéo.

Sur fond d'une image vidéo 20 un OSD 21, composé d'un premier motif 24 affiché avec la trame paire et d'un second motif 25 affiché avec la trame impaire donne une impression de tremblement 26. L'OSD semble descendre et monter d'une amplitude d'un pixel à un rythme imposé par la fréquence de rafraîchissement des trames de l'image.

Ce problème de tremblement (flutter dans la littérature anglaise), a des origines identiques à celles qui créent problème de scintillement. Le phénomène de tremblement apparaît lorsque la même image est affichée par la trame paire et par la trame impaire. Selon le système de télévision utilisé, la trame paire apparaît tous les 1/25 secondes ou 1/30 secondes en alternance avec la trame impaire. L'oeil humain détecte alors un mouvement de tremblement dû à l'apparition de l'OSD alternativement sur un ensemble de lignes puis sur l'ensemble de lignes directement voisines.

Ces phénomènes de scintillement et de tremblement sont principalement sensibles lorsqu'on affiche de longs traits horizontaux à l'écran, ce qui est fréquent dans les OSD.

Pour résoudre ces problèmes, qui sont des problèmes de transitions verticales dans la définition de l'image lors de l'affichage d'un ou plusieurs OSD, il existe différentes solutions connues.

Il est par exemple possible d'intervenir sur la transparence du pixel d'un OSD. Cette solution est appliquée aux lignes ou aux groupes de lignes qui constituent la zone frontière entre un OSD et une image vidéo.

Diverses autres solutions, telles que la pondération de pixels, l'utilisation de commandes mémorisées, et l'utilisation d'un circuit de sommation sont également décrites dans les brevets antérieurs US 5 510 843, EP 0 762 331, et US 5 742 349.

Afin d'éviter les transitions brutales de couleurs qui donnent naissance aux phénomènes précédemment exposés, il est également possible d'appliquer des filtres mathématiques. Ces filtres mathématiques permettent de modifier les valeurs de certains pixels en faisant intervenir, après pondération, les valeurs de pixels voisins pour le calcul des nouvelles valeurs des pixels concernés.

Le principe de ces filtres mathématiques est le suivant:

Pour une ligne de pixels d'un OSD à traiter, qui sera dite ligne courante, les valeurs des pixels des lignes voisines de la ligne courante sont prises en compte pour la détermination des nouvelles valeurs des pixels de la ligne courante. Par exemple, pour une ligne courante n de la trame impaire I, les lignes n et n-1 de la trame paire P sont prises en compte. Pour chaque pixel k de la ligne courante de l'OSD, qui sera affiché à une colonne i de l'écran, les nouvelles valeurs $I_i^*(n)$ du pixel k sont calculées à partir :

- des valeurs, respectivement $P_i(n)$ et $P_i(n-1)$, des pixels des lignes n et n-1 de la trame paire P de l'OSD qui seront affichés à la colonne i de l'écran ;
- des anciennes valeurs $I_i(n)$ du pixel k de la ligne courante. Dans l'exemple considéré, les nouvelles valeurs $I_i^*(n)$ peuvent être obtenues selon l'expression suivante:

$$I_i^*(n)=a.P_i(n-1)+b.I_i(n)+c.P_i(n) \quad (\text{équation 1}).$$

a, b, et c désignent des coefficients de pondération. Les coefficients de pondération sont spécifiques, par leur nombre et par leur valeur, à chaque filtre mathématique. Leur valeur est comprise entre 0 et 1 et la somme de tous les coefficients de pondération intervenant doit être égale à 1.

Dans cet exemple, seules les deux lignes de pixel adjacentes de la ligne de pixels à traiter sont considérées. Les nouvelles valeurs $I_i^*(n)$ ainsi obtenues, permettent d'obtenir une ligne de pixels qui ne contrastera pas trop avec les lignes voisines, et les risques de scintillement et de tremblement à l'intérieur de l'OSD sont ainsi diminués.

Bien que les filtres mathématiques associés à l'équation 1 sont généralement assez efficaces, rien n'empêche d'appliquer des filtres mathématiques qui font intervenir dans les calculs plus de trois lignes de pixels.

Si de tels filtres mathématiques sont efficaces à l'intérieur des OSD, ils ne peuvent pas s'appliquer aux lignes de l'OSD qui constituent la frontière entre l'OSD et l'image vidéo d'origine: en effet, les valeurs des pixels des lignes vidéo, autres que celles correspondant à la ligne courante, ne sont pas disponibles car elles ne sont pas conservées en mémoire. Ainsi, le filtre associé à l'équation 1 ne pourrait pas être appliqué.

En effet, les valeurs $P_i(n-1)$ ne sont pas disponibles car ce sont les valeurs des pixels d'une ligne déjà affichée d'une image vidéo d'origine.

De la même façon, un filtre mathématique qui attribue aux pixels, pour la ligne courante n et chaque colonne i de la trame paire P, les nouvelles valeurs $P_i^*(n)$ selon l'expression :

$$P_i{}^*(n)=a.I_i(n)+b.P_i(n)+c.I_i(n+1) \quad (\text{équation 2})$$

ne peut pas s'appliquer à une ligne d'un OSD qui précède une ligne d'une image vidéo d'origine. En effet, les valeurs $I_i(n+1)$ correspondent à la ligne suivante de la ligne courante. Elles ne sont pas disponibles dans une quelconque mémoire.

Ainsi, lorsque la ligne de pixels de l'OSD à traiter est une ligne marquant la frontière entre l'OSD et l'image vidéo d'origine, on ne tient pas compte des valeurs des pixels des lignes directement adjacentes à la ligne courante.

L'équation 1 devient alors :

$$I_i{}^*(n)=a.I_i(n)+b.P_i(n) \quad (\text{équation 3}) \; ;$$

l'équation 2 devient alors :

$$P_i{}^*(n)=a.I_i(n)+b.P_i(n) \quad (\text{équation 4}).$$

Par conséquent, si les lignes de pixels de l'image d'origine, directement adjacentes à l'OSD, contrastent fortement avec les lignes frontières de l'OSD, les phénomènes de tremblement et de scintillement seront encore très présents. En effet, les lignes de pixels de l'image vidéo d'origine n'interviennent pas dans les calculs. Aucune atténuation de contraste n'est donc effectuée par rapport aux lignes de l'image vidéo d'origine.

De plus, l'impossibilité d'utiliser des filtres mathématiques associés aux équations 1 ou 2, qui sont des filtres performants, pour l'ensemble des lignes à traiter d'un OSD, oblige à utiliser, soit des filtres moins performants pour l'ensemble des lignes à traiter de l'OSD, soit différents filtres, chacun d'eux étant adapté à la situation d'une ligne de l'OSD à traiter.

Cette dernière solution est complexe à gérer et nécessite une mémoire de programmation plus importante.

Les problèmes qui viennent d'être exposés sont résolus par l'invention en ce qu'elle présente un procédé qui permet d'attribuer des valeurs aux pixels de l'image vidéo d'origine qui interviennent dans les calculs associés à un filtre mathématique.

Le procédé selon l'invention tire parti du fait que, lorsque l'on veut traiter une ligne de pixels d'un OSD, les valeurs des pixels de la ligne correspondante dans l'image vidéo d'origine sont disponibles. Le procédé selon l'invention extrapole la valeur de ces pixels aux pixels de l'image vidéo qui interviennent dans les calculs liés à l'application d'un filtre mathématique, mais dont les valeurs ne sont plus disponibles .

L'invention concerne donc un procédé de correction d'effets de tremblement et de scintillement d'un OSD sur une image vidéo tel que défini par la revendication 1.

Il faut préciser qu'une ligne d'un OSD correspond le plus souvent à une portion de ligne de l'écran.

Les différents aspects et avantages de l'invention apparaîtront plus clairement dans la suite de la description en référence aux figures qui ne sont données qu'à titre indicatif et nullement limitatif de l'invention et qui sont à présent introduites:

- La figure 1, déjà décrite, montre une structure courante du code d'un OSD.
- Les figures 2a et 2b déjà décrites, illustrent respectivement les problèmes de scintillement et de tremblement lors de l'affichage d'un OSD sur un fond d'image vidéo.
- La figure 3 est un schéma bloc d'une réalisation préférée d'un circuit permettant de mettre en oeuvre le procédé selon l'invention.

A la figure 3, une interface de génération d'OSD 30 est connectée à une interface d'insertion d'OSD 32 au moyen d'un premier bus de données. Un signal vidéo 36, qui représente le signal vidéo d'origine, est transmis à l'interface d'insertion d'OSD 32 au moyen d'une première liaison 38. Une interface de traitement 40 peut échanger des informations avec l'interface d'insertion d'OSD 32 au moyen d'un deuxième bus de données 42 et d'un troisième bus de données 44. Un cinquième bus de données 46 assure la connexion entre l'interface de génération d'OSD 30 et l'interface de traitement 40. Une unité de contrôle 48 contrôle certaines des opérations effectuées par l'interface de génération d'OSD 30, l'interface d'insertion d'OSD 32, et l'interface de traitement 40. Les données ou signaux produits par l'interface d'insertion d'OSD 32 sont communiqués à un poste de télévision 50 au moyen d'une liaison 52 qui peut être par exemple une liaison câblée ou hertzienne.

Le circuit de la figure 3 permet de mettre en oeuvre le procédé selon l'invention de la façon suivante : toutes les données relatives à un OSD que l'on veut afficher à l'écran sont connues dans l'interface de génération d'OSD 30. Pour chaque ligne d'un OSD à afficher, les valeurs des pixels sont transmises à l'unité d'insertion d'OSD 32 à la même fréquence que sont transmises les lignes de l'image vidéo d'origine à l'interface d'insertion d'OSD 32 au moyen de la liaison 38. Quand une ligne de pixels de l'OSD doit subir l'intervention d'un filtre mathématique, les valeurs des pixels de la ligne courante de l'OSD sont transmises à l'interface de traitement 40 au moyen du deuxième bus de données 42. Si le filtre mathématique appliqué est associé à une équation qui nécessite la connaissance des valeurs d'autres pixels de l'OSD, ces valeurs sont communiquées à l'interface de traitement 40 au moyen du quatrième bus de données 46. Si le filtre mathématique appliqué est associé à une équation ou à des équations qui nécessitent la connaissance des valeurs de pixels de l'image vidéo d'origine, ce sont les valeurs des pixels de la ligne vidéo d'origine courante qui sont transmises à l'interface de traitement 40 au moyen du deuxième bus de communication 42. Les valeurs des pixels de la ligne vidéo courante sont utilisées comme valeurs de pixels des autres lignes de l'image vidéo d'origine qui interviennent dans les calculs imposés par les équations associées au filtre mathématique. Une fois les calculs effectués, les nouvelles valeurs des pixels de la ligne courante de l'OSD sont transmises à l'interface d'insertion d'OSD 32 au moyen du troisième bus de données 44. Les informations relatives à chaque pixel à afficher peuvent alors être transmises vers un poste de télévision 50 au moyen de la liaison 52.

Dans une application préférée de l'invention, le filtre mathématique utilisé est associé à une unique équation. Le procédé selon l'invention permet en effet d'appliquer l'équation au traitement de lignes de l'OSD qui nécessite la connaissance des valeurs des pixels de l'image vidéo d'origine ou qui se contente de la connaissance des valeurs des pixels de l'OSD. Un filtre mathématique associé à l'équation 1 ou à l'équation 2 précédemment décrites peut ainsi être utilisé pour l'ensemble des lignes à traiter de l'OSD. L'équation 1 et l'équation 2, qui font intervenir les valeurs des pixels de la ligne de l'OSD à traiter et les valeurs des pixels des deux lignes voisines de la ligne à traiter, peuvent, dans une application préférée de l'invention, être affectées respectivement des coefficients de pondération égaux à 0.5, 0.25 et 0.25.

Dans ce cas particulier, lorsqu'une ligne frontière de l'OSD est traitée , l'équation 1 devient :

$$I_i{}^* \ (n) \ = \ 0{,}25.P_i \ (n-1) \ + \ 0{,}5.I_i \ (n) \ + \ 0{,}25 \ P_i \ (n);$$

la valeur $P_i$ (n-1) est, selon le procédé de l'invention, la valeur du pixel de la colonne i de la ligne n de l'image vidéo.

Le procédé selon l'invention tire parti du fait que dans une image vidéo d'origine, deux lignes successives ne présentent que très rarement des pixels de couleurs très différentes.

Le procédé selon l'invention tire également parti du fait que les changements de couleurs entre deux lignes ne sont tout simplement pas très nombreux dans une image vidéo classique.

**Revendications**

1. Procédé de correction d'effets de tremblement et de scintillement d'un OSD sur une image vidéo comprenant notamment les étapes suivantes:

   - les valeurs de chaque pixel de l'OSD sont programmées et mises en mémoire,
   - des pixels des lignes de l'OSD à afficher sans traitement particulier sont substitués à des pixels de l'image vidéo dans une unité d'insertion d'OSD,
   - des pixels des lignes de l'OSD à afficher après un traitement subissent l'intervention d'un filtre mathématique

   **caractérisé en ce que** l'intervention du filtre mathématique comprend notamment les étapes suivantes:

   - à chaque pixel d'une colonne de l'image vidéo d'origine non recouvert par les pixels de l'OSD et intervenant dans des équations associées au filtre mathématique, on attribue les valeurs d'un autre pixel de l'image vidéo d'origine, cet autre pixel appartenant à ladite colonne et à la plus proche des lignes recouvertes par l'OSD, et **en ce que** le filtre mathématique appliqué est associé à une équation faisant intervenir les valeurs des pixels de la ligne de l'OSD à traiter et les valeurs des pixels des deux lignes voisines de la ligne à traiter, des coefficients de pondération étant affectés à toutes ces valeurs.

2. Procédé de correction d'effets de tremblement et de scintillement d'un OSD sur une image vidéo selon la revendication 1 **caractérisé en ce que** le filtre mathématique est associé à une unique équation à appliquer aux lignes de l'OSD à traiter.

**3.** Procédé de correction d'effets de tremblement et de scintillement d'un OSD sur une image vidéo selon la revendication 1 ou 2, **caractérisé en ce que** des coefficients de pondération affectés à la ligne à traiter et aux deux lignes directement voisines sont respectivement 0.5, 0.25 et 0.25.

**Claims**

**1.** A method for the correction of effects of flutter and flicker of an OSD on a video image especially comprising the following steps:

- the values of each pixel of the OSD are programmed and memorized,
- pixels of the lines of the OSD to be displayed without particular processing are substituted for pixels of the video image by means of an OSD insertion unit,
- pixels of lines of the OSD to be displayed after processing are subjected to the action of a mathematical filter, wherein the intervention of the mathematical filter especially comprises the following steps:

- to each pixel of a column of an original video image not covered by the pixels of the OSD and playing a role in equations associated with a mathematical filter, there are assigned the values of another pixel of the original video image, this other pixel belonging to said column and to the closest of the lines covered by the OSD, and wherein the mathematical filter applied is associated with an equation bringing into play the values of the pixels of the line of the OSD to be processed and the values of the pixels of the two lines neighboring the line to be processed, weighting coefficients being applied to all these values.

**2.** A method for the correction of effects of flutter and flicker of an OSD on a video image according to claim 1, wherein the mathematical filter is associated with a single equation to be applied to the lines of the OSD to be processed.

**3.** A method for the correction of effects of flutter and flicker of an OSD on a video image according to claim 1 or 2, wherein weighting coefficients assigned to the line to be processed and to the directly neighboring lines are 0.5, 0.25 and 0.25.

**Patentansprüche**

**1.** Verfahren zur Korrektur von Zitter- und Flimmereffekten eines OSD auf ein Videobild mit insbesondere den folgenden Schritten:

- die Werte jedes Bildpunktes des OSD werden programmiert und gespeichert,
- die Bildpunkte der ohne spezielle Behandlung darzustellenden Zeilen des OSD werden in einer Einfügeeinheit des OSD durch Bildpunkte des Videobildes ersetzt,
- Bildpunkte von nach einer Behandlung darzustellenden Zeilen des OSD werden dem Einfluss eines mathematischen Filters unterzogen,

**dadurch gekennzeichnet, dass** der Eingriff des mathematischen Filters insbesondere die folgenden Schritte umfasst:

- jedem Bildpunkt einer Spalte des Ursprungs-Videobilds, der nicht von den Bildpunkten des OSD umfasst ist und in dem mathematischen Filter zugeordnete Gleichungen eingreift, Werte eines anderen Bildpunktes des Ursprungs-Videobildes zugewiesen wird, wobei dieser andere Bildpunkt zu der Spalte und zu der nächsten der durch das OSD umfassten Zeilen gehört, und, dass das angewendete mathematische Filter einer Gleichung zugeordnet wird, welche die Werte der Bildpunkte der zu behandelnden Zeile des OSD und die Werte der Bildpunkte der der zu behandelnden Zeile benachbarten zwei Zeilen beeinflusst, wobei Gewichtungskoeffizienten für alle diese Werte verwendet werden.

**2.** Verfahren zur Korrektur von Zitter- und Flimmereffekten eines OSD auf ein Videobild gemäß Anspruch 1, **dadurch gekennzeichnet, dass** das mathematische Filter einer einzigen Gleichung zugeordnet wird, die auf die zu behandelnden Zeilen des OSD anzuwenden ist.

3. Verfahren zur Korrektur von Zitter- und Flimmereffekten eines OSD auf ein Videobild gemäß Anspruch 1 oder 2, **dadurch gekennzeichnet, dass** die für die zu behandelnde Zeile und den direkt benachbarten zwei Zeilen bereit gestellten Gewichtungskoeffizienten jeweils 0,5, 0,25 und 0,25 betragen.

## FIG_3

## FIG_2a

## FIG_2b

## FIG_1